Europäisches Patentamt

European Patent Office

Office européen des brevets

(19)

(11) **EP 1 473 670 A2**

(12) **EUROPEAN PATENT APPLICATION**

(43) Date of publication:
**03.11.2004 Bulletin 2004/45**

(51) Int Cl.⁷: **G06T 5/00**

(21) Application number: **04101795.5**

(22) Date of filing: **28.04.2004**

| | |
|---|---|
| (84) Designated Contracting States:<br>**AT BE BG CH CY CZ DE DK EE ES FI FR GB GR HU IE IT LI LU MC NL PL PT RO SE SI SK TR**<br>Designated Extension States:<br>**AL HR LT LV MK** | (72) Inventors:<br>• **Lin, Peng**<br>  **Irvine, California 92606 (US)**<br>• **Kim, Yeong-taeg**<br>  **Irvine, California 92618 (US)** |
| (30) Priority: **28.04.2003 US 449189** | (74) Representative: **Read, Matthew Charles et al**<br>**Venner Shipley LLP**<br>**20 Little Britain**<br>**London EC1A 7DH (GB)** |
| (71) Applicant: **Samsung Electronics Co., Ltd.**<br>**Suwon 442-742, Gyeonggi-do (KR)** | |

(54) **Colour edge enhancement method**

(57)    An improved method for colour transient enhancement in an input video frame of pixels. The luminance value of a current pixel is compared to that of neighbouring pixels (12). A correction value is determined (14) and the chrominance value of the current pixel is "pushed" towards the neighbouring pixel that has a luminance value closest to that of the current pixel, by adding the correction value to the current pixel's chrominance value (16). The original video frame is also separately processed using a CTI method (18), and the current pixel's corrected chrominance value is combined with the corresponding pixel in the output of the CTI processing by soft switching unit to generate an output video frame that is an enhanced version of the input video frame (20).

**EP 1 473 670 A2**

**EP 1 473 670 A2**

**Description**

The present invention relates to a method of colour edge enhancement of a video signal and to a video processing apparatus for performing colour edge enhancement on a video signal.

In colour TV broadcasting standards, such as NTSC, PAL and SECAM, the transmitted signals include chrominance signals and luminance signals. In comparison to the luminance signal bandwidth, the chrominance signal bandwidth is rather narrow. The limited bandwidth of the chrominance signal produces relatively slow chrominance transitions, causing smeared colour edges in the received/displayed images.

Different techniques have been used in attempts to enhance the sharpness of colour transitions, such as those described in US-A-4935806 and US-A-5920357, known as "Colour Transient Improvement" techniques. The basic steps in the Colour Transient Improvement techniques are to add a "correction signal" (such as the second derivative of the original signal, using a high-pass filter) to the original chrominance signals to restore the frequency components lost due to the limited bandwidth. This is followed by post-processing to remove any undershoot and overshoot.

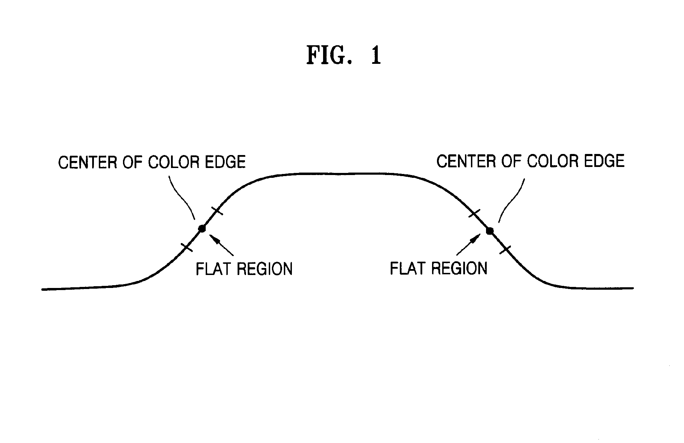

However, as shown in the example colour transition plot in Figure 1, the centre of the colour edge has a second derivative that equals zero, wherein the colour transition near the centre of the colour edge is almost "flat". Therefore, the high-pass filter response near the centre of the colour edge is very weak. As a result, the region near the centre of the colour transition is left barely touched by conventional Colour Transient Improvement methods.

There is, therefore, a need for a video enhancement method that sufficiently sharpens the slope of the colour transient and for an apparatus that properly processes the "flat" region near the centre of the colour transition to restore the frequency components lost due to the limited bandwidth.

A method of colour edge enhancement of a video signal, according to the present invention, is characterised by modifying a chrominance value of a pixel in dependence on the rates of change of luminance on opposite sides of said pixel. Thus, a method that properly processes the "flat" region near the centre of the colour transition to restore the frequency components lost due to the limited bandwidth is provided. Furthermore, a method that can be used in conjunction with conventional methods, to process the video signal according to CTI methods when the second derivative of the input chrominance signal is large, is provided.

Preferably, said opposite sides are left and right.

Preferably, said opposite sides are above and below.

Preferably, said rates of change of luminance are the rates of change of luminance across one inter-pixel space.

A video processing apparatus, according to the present invention, is characterised by means for modifying a chrominance value of a pixel in dependence on the rates of change of luminance on opposite sides of said pixel.

Preferably, said opposite sides are left and right.

Preferably, said opposite sides are above and below.

Preferably, said rates of change of luminance are the rates of change of luminance across one inter-pixel space.

Preferably, said means comprises:

means configured to generate chrominance correction signals based on said rates of change of luminance;
selecting means configured to select the chrominance correction signal corresponding to the smaller rate of change of luminance; and
summing means configured to add the selected chrominance correction signal to the chrominance value of said pixel.

Embodiments of the present invention will now be described, by way of example, with reference to Figures 2 to 6 of the accompanying drawings, in which:

Figure 1 is an example plot showing the "flat" region near the centre of a colour transition;
Figure 2A is a flowchart showing an embodiment of a video processing method according to the present invention;
Figure 2B is a block diagram showing the architecture of an embodiment of a video processing system according to the present invention;
Figure 3 is a diagram illustrating an example of modifying the chrominance value of a current pixel according to the present invention, by "pushing" the pixel down to make it closer to that of its left neighbouring pixel, based on the luminance values of pixels near the current pixel;
Figure 4 is a diagram illustrating another example of modifying the chrominance value of a current pixel according to the present invention, by "pushing" the pixel up to make it closer to that of its left neighbouring pixel, based on the luminance values of pixels near the current pixel;

Figure 5 is a diagram illustrating yet another example of modifying the chrominance value of a current pixel according to the present invention, by "pushing" the pixel up to make it closer to that of its right neighbouring pixel, based on the luminance values of pixels near the current pixel; and

Figure 6 is a diagram illustrating still another example of modifying the chrominance value of a current pixel according to the present invention, by "pushing" the pixel down to make it closer to that of its right neighbouring pixel, based on the luminance values of pixels near the current pixel.

In one embodiment, there is provided a method and apparatus to enhance colour transients in input video signals including chrominance and luminance signals that represent video frames comprising pixels of video information.

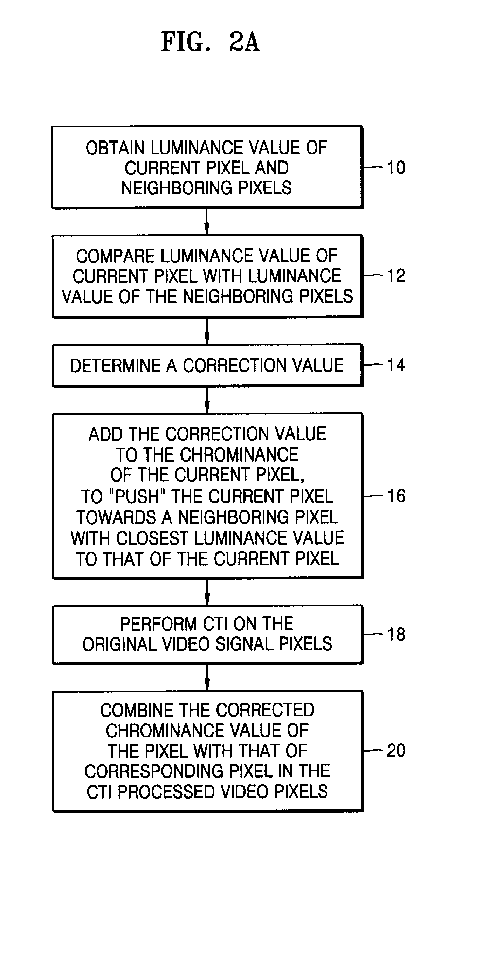

Referring to Figure 2A, in processing a frame of MxN pixels, first the luminance value of the current pixel and neighbouring pixels are obtained (step 10). Next, the luminance value of the current pixel is compared to that of the neighbouring pixels. In this example, a determination is made as to whether the luminance value of a current pixel is closer to that of its left (or upper) neighbouring pixel or to that of its right (or lower) neighbouring pixel (step 12). A correction value is determined (step 14) and the chrominance value of the current pixel is "pushed" towards the neighbouring pixel that has a luminance value closest to that of the current pixel, by adding the correction value to the current pixel's chrominance value (step 16). The original video frame is also separately processed using a CTI method (step 18) and the current pixel's corrected chrominance value is combined, by a soft switching unit, with the corresponding pixel in the output of the CTI processing to generate an output video frame that is an enhanced version of the input video frame (step 20).

In one example implementation, initially the first derivatives, including left and right derivatives, of both the input chrominance signal and luminance signal are computed. Based on the computed first derivatives of the chrominance and luminance signals, two correction signals are computed.

A logic control unit determines whether the chrominance signal at the current pixel position requires correction. When the logic control unit determines that correction of the chrominance signal is required, it chooses one of the computed correction signals based on the relationship between the left and right derivatives of the luminance signal. The correction signal is then added to the original chrominance signal.

As such, the chrominance signal correction procedure "pushes" the chrominance value of the current pixel towards that of its left/right neighbouring pixel, when the luminance value of the current pixel is closer to that of its left/right neighbouring pixel.

Finally, the corrected chrominance signal can be combined with the output of a CTI processing unit using a soft switching unit. The soft switching is based on the second derivative of the original chrominance signal. As such, in another aspect, an enhancement system according to the present invention uses a CTI method if the second derivative of the input chrominance signal is large, but then smoothly switches to the "flat" transition centre correction method described above, when the second derivative of the input chrominance signal is small.

Therefore, an enhancement method according to the present invention sufficiently sharpens the slope of the colour transient and processes the "flat" region near the centre of the colour transition to restore the frequency components lost due to the limited bandwidth. Further, such a method can be used in conjunction with CTI methods, to process the video signal according to CTI methods when the second derivative of the input chrominance signal is large.

To help understanding, the following examples of the present invention are described using chrominance signal *U*. However as those skilled in the art recognize, the present invention is useful with chrominance signals *U* and *V* and other characteristic signals. Furthermore, to help understanding the examples below are described with reference to horizontal processing (i.e. comparison of the luminance value of a pixel with that of its left and right neighbouring pixels). However, it is also appreciated that the processing may be vertical (i.e. comparison with upper and lower neighbouring pixels).

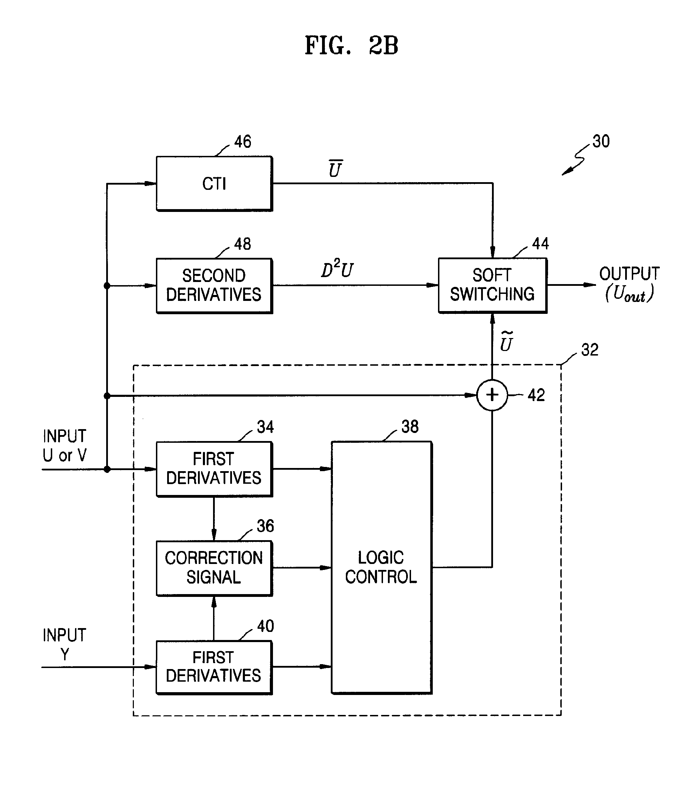

Referring to Figure 2B, the video processing system 30 comprises a chrominance correction section 32. In the chrominance correction section 32, the input chrominance signal is first supplied to a first derivatives calculator 34 for the chrominance signal *U*. The first derivatives calculator 34 calculates the following first derivatives:

$$dU_1(x) = U(x - 1, y) - U(x, y), \qquad (1)$$

$$dU_r(x) = U(x+1, y) - U(x, y), \qquad (2)$$

$$dU(x) = \min(|dU_l(x)|, |dU_r(x)|). \qquad (3)$$

The indices *l* and *r* represent "left" and "right", respectively. The first derivatives $dU_l(x)$ and $dU_r(x)$ are supplied to a correction signal computing unit 36. The first derivative $dU(x)$ is also supplied to the logic control unit 38.

As shown in Figure 2, another input signal, the luminance signal *Y,* is supplied to another first derivatives calculator 40 that calculates first derivatives of the luminance signal *Y* as:

$$dY_l(x) = Y(x-1,y) - Y(x,y), \qquad (4)$$

$$dY_r(x) = Y(x+1, y) - Y(x, y), \qquad (5)$$

$$dY(x) = ||dY_r(x)| - |dY_l(x)||. \qquad (6)$$

The first derivatives $dY_l(x)$ and $dY_r(x)$ are supplied to the correction signal computing unit 36 and the first derivatives $dY_l(x) dY_r(x)$ and $dY(x)$ are supplied to the logic control unit 38.

The correction signal computing unit 36 uses the outputs of the two first derivatives calculators 34, 40 for the luminance and chrominance signals, respectively, to compute a correction signal. To do so, the correction signal computing unit 36 first computes the following gain control values:

$$g_l(x) = \begin{cases} 1, & \text{if } |dY_l(x)| < T_g; \\ T_g / |dY_l(x)|, & \text{otherwise.} \end{cases} \qquad (7)$$

$$g_r(x) = \begin{cases} 1, & \text{if } |dY_r(x)| < T_g; \\ T_g / |dY_r(x)|, & \text{otherwise.} \end{cases} \qquad (8)$$

wherein $T_g$ is an empirically determined threshold value.

Then, the correction signal computing unit 36 computes the correction signals by determining the products of the left and right gain control functions and the corresponding left and right first derivatives of the chrominance signal, respectively, i.e. $g_l(x)^* dU_l(x)$ and $g_r(x)^* dU_r(x)$.

The correction signals are supplied to the logic control unit 38, wherein the logic control unit 38 determines which correction signal to use to correct the original input chrominance signal. That determination is made based on the values of the luminance signal of the pixels near a current pixel, as described in the examples below.

In the present example, when the luminance value of the current pixel is closer to that of its left neighbouring pixel, then the chrominance value of the current pixel is "pushed" towards that of its left neighbouring pixel. Furthermore, when the luminance value of the current pixel is closer to that of its right neighbouring pixel, then the chrominance value of the current pixel is pushed towards that of its right neighbouring pixel.

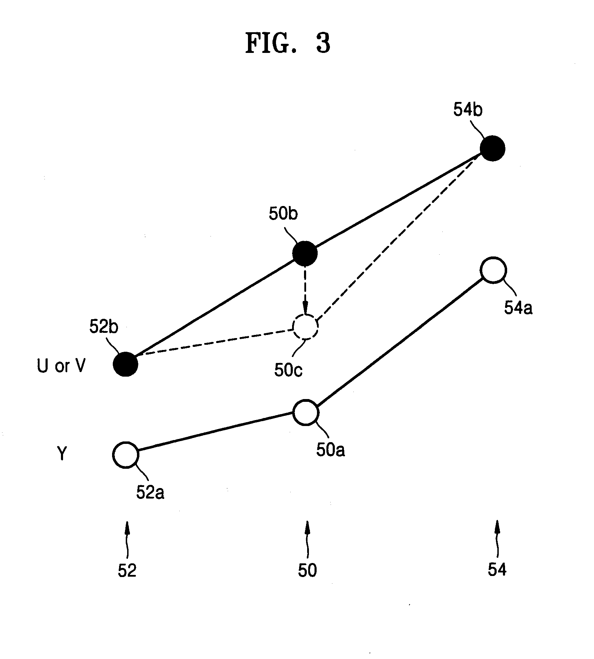

Referring to Figure 3, for a current pixel 50, the luminance value *Y* (hollow circle) 50a is closer to the luminance value 52a of its left neighbouring pixel 52, than the luminance value 54a of the right neighbouring pixel 54. In this case, the chrominance value *U* (solid circle) 50b of the current pixel 50 is pushed down to make it closer to the chrominance value 52b of its left neighbouring pixel 52 by adding the left correction signal, e.g. $g_l(x)^* dU_l(x)$. In the example shown in Figure 3, the left correction signal $g_l(x)^* dU_l(x)$ is negative. Thus, the chrominance value 50b for the current pixel 50 is "pushed down" to a value 50c (as symbolically shown by the dashed arrow) by adding the left correction signal $g_l(x)^* dU_l(x)$. The corrected luminance 50c for the current pixel 50 is shown by a hollow-dashed circle in Figure 3.

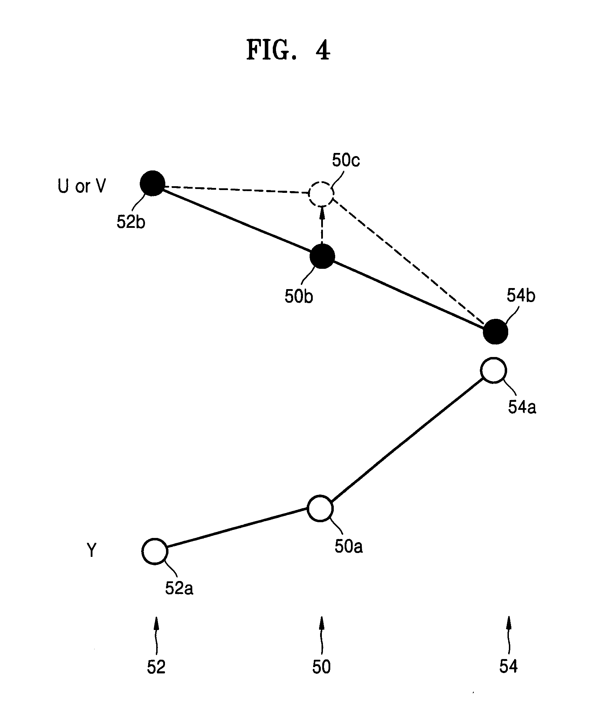

Referring to Figure 4, the luminance value *Y* (hollow circle) 50a of the current pixel 50 is closer to that of its left neighbouring pixel 52 than that of the right neighbouring pixel 54. Accordingly, the chrominance value *U* (solid circle) 50b of the current pixel 50 is pushed towards that of it left neighbouring pixel 52 by adding the left correction signal, $g_l(x)^* dU_l(x)$, to it. In this case, $g_l(x)^* dU_l(x)$ is positive, so the chrominance signal *U* (solid circle) 50b of the current pixel 50 is pushed up as shown by the corrected luminance value 50c.

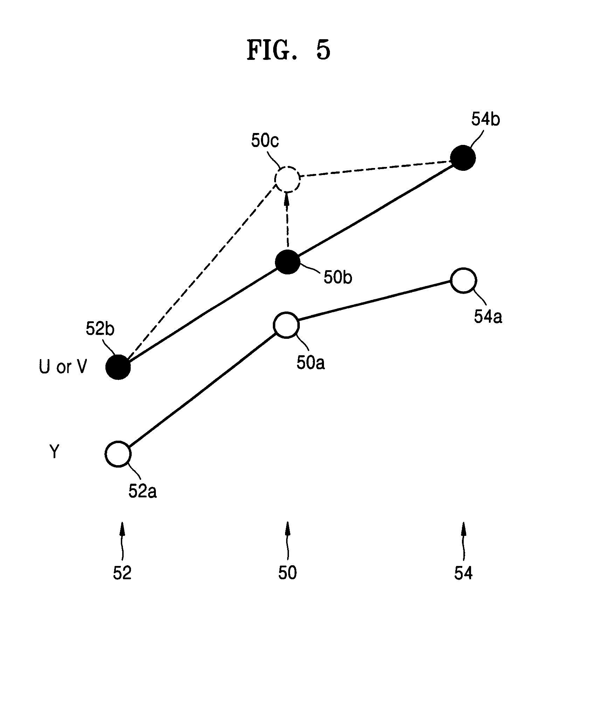

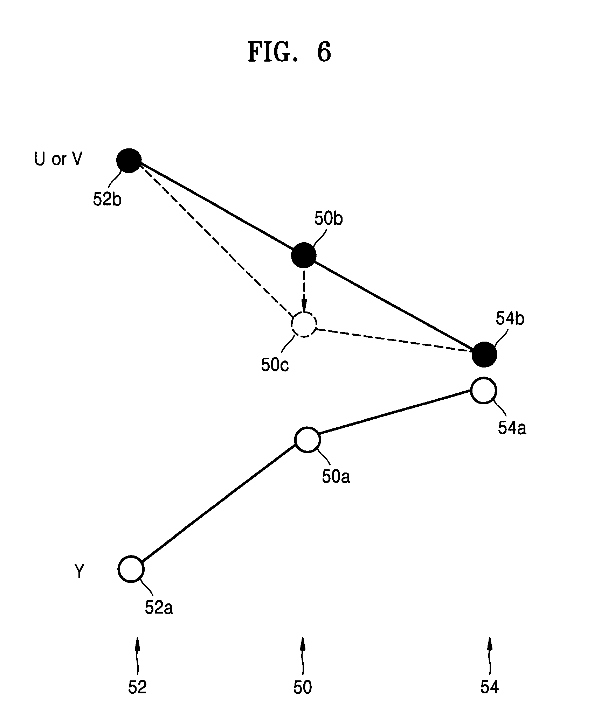

Similarly, Figures 5 and 6 show examples wherein the chrominance value *U* 50b of the current pixel 50 is pushed towards that of its right neighbouring pixel 54 because the luminance value *Y* 50a of the current pixel 50 is closer to that of its right neighbouring pixel 54, than that of the left neighbouring pixel 52. To push the chrominance value $U$ 50b of the current pixel 50 towards that of its right neighbouring pixel 54, the right correction signal, $g_r(x) * dU_r(x)$, is selected and added to the chrominance value $U$ 50b to generate the corrected chrominance value 50c.

Referring back to Figure 2B, generally, the output of the example logic control unit 38 can be summarised by the pseudo-code:

$$\text{if } (dU(x) > T_u \text{ and } dY(x) > T_y) \text{ then} \tag{9}$$

$$\{ \quad \text{if } (|dY_l(x)| < |dY_r(x)|) \text{ then}$$

$$\text{return } g_l(x) * dU_l(x),$$

$$\text{if } (|dY_l(x)| > |dY_r(x)|) \text{ then}$$

$$\text{return } g_r(x) * dU_r(x),$$

$$\}$$

$$\text{else}$$

$$\text{return } 0;$$

wherein $T_u$ and $T_y$ axe empirically determined threshold values.

The condition $dU(x) > T_u$ in the first "if" statement in the pseudo-code above is to check whether the difference of the chrominance signal $U$ at the current pixel relative to that of neighbouring pixels is significant. When the difference is not significant, the chrominance signal $U$ does not need to be corrected ("pushed") at the current pixel. When the difference is significant, the condition $dY(x) > T_y$ is checked, to determine whether the luminance value $Y$ at the current pixel is biased to the value of any of its two neighbouring pixels. When $dY(x)$ is small, the luminance value $Y$ at the current pixel is not biased to the value of any of its two neighbouring pixels. This case indicates a gradual colour change, thus no correction is required. Therefore, only when $dU(x) > T_u$ and $dY(x) > T_y$, does the chrominance value $U$ at the current pixel require correction.

In the example of Figure 2B, the output of the logic control unit 38 (i.e. correction signal) and the input original chrominance signal $U$ are supplied to a summer junction 42, wherein the summer junction 42 adds the correction signal to the original chrominance signal $U$ for a current pixel. Thereby, each pixel of a frame of pixels representing a video image is so processed.

The output, $\tilde{U}$, of the summer junction 42 depends on the correction signal/value selected by the logic control unit 38, and can be expressed according to the pseudo-code:

$$\text{if } (dU(x) > T_u \text{ and } dY(x) > T_y) \text{ then} \tag{10}$$

$$\{ \quad \text{if } (|dY_l(x)| < |dY_r(x)|) \text{ then}$$

$$\tilde{U}(x) = U(x) + g_l(x) * dU_l(x),$$

$$\text{if } (|dY_l(x)| > |dY_r(x)|) \text{ then}$$

$$\tilde{U}(x) = U(x) + g_r(x) * dU_r(x),$$

$$\}$$

$$\text{else}$$

$$\tilde{U}(x) = U(x).$$

In one aspect of the present invention, the input chrominance signal is separately supplied to a CTI unit 46 that implements a colour transient improvement algorithm. The output of the CTI unit 46, denoted as $\overline{U}$, is supplied to a soft switching unit 44. The output $\widetilde{U}$ of the summer junction 42 is also supplied to the soft switching unit 44, where it is combined with the output of the CTI unit 46. The input chrominance signal $U$ is also supplied to a second derivative calculator 48 to calculate the second derivative $D^2U$. In one example, the second derivative is approximated by a band-pass filter with the filter coefficients (1, -2, 1). The output of the second derivative calculator 48 is also supplied to the soft switching unit 44.

At the soft switching unit 44, the output of the CTI unit 46, $\overline{U}$, is combined with the corrected signal $\widetilde{U}$. As noted above, because the centre of the colour edge has a second derivative that equals zero, the colour transition near the centre of the colour edge is almost "flat". Therefore, the region near the centre of the colour transition is not enhanced by the high-pass filtering of conventional colour transient improvement methods. As such, the soft switching unit 44 switches to the corrected signal $\widetilde{U}$ as the output $U_{out}$ in Figure 2.

In one example, such soft switching is realized as:

$$U_{out}(x) = (1 - \alpha(x)) * \overline{U}(x) + \alpha(x) * \widetilde{U}(x) \qquad (11)$$

wherein $U_{out}$ is the output of the video processing system of Figure 2B and $\alpha(x)$ isthe soft switching function which is defined as following:

$$\alpha(x) = 1 \qquad \text{if } \left|D^2U(x)\right| < T_1 ; \qquad (12)$$

$$\alpha(x) = 0 \qquad \text{if } \left|D^2U(x)\right| < T_2 ; \qquad (13)$$

$$\alpha(x) = (T_2 - \left|D^2U(x)\right|) / (T_2 - T_1) \qquad \text{if } T_1 \le \left|D^2U(x)\right| \le T_2 ; \qquad (14)$$

where $T_1$ and $T_2$ are empirically determined threshold values.

From the expression (11) for $U_{out}(x)$ and the definitions (12) to (14) for $\alpha(x)$, it can be seen that in the "non-flat" region (i.e. $|D^2U(x)| > T_2$) the output $U_{out}(x) = \overline{U}(x)$. It can further be seen that in the "flat" region (i.e. $|D^2U(x)| < T_1$) the output $U_{out}(x) = \widetilde{U}(x)$, wherein $U_{out}(x)$is a function that varies smoothly from $U$ to $\widetilde{U}$.

The above example enhancement method and apparatus have been described in relation to a two-dimensional frame of pixels situated in rows and columns.

Though the enhancement process above has been described in relation to pixels in columns that are to the right/left of a current pixel, the above process is equally applicable to other pixels neighbouring the current pixel, including pixels in rows above and below a current pixel in the frame.

As such, the luminance value of the current pixel is compared to that of neighbouring pixels (e.g., right, left, above, below, etc.), to identify a neighbouring pixel with a luminance value closest to the luminance value of the current pixel. A correction value is then calculated and added to the chrominance value of the current pixel to generate a corrected chrominance value that is close to the chrominance value of the identified neighbouring pixel. The original video frame is also processed using a CTI method, wherein the corrected chrominance value of the current pixel is combined with the corresponding pixel in the output of the CTI processing by soft switching, to generate an output video frame that is an enhanced version of the input video frame.

Furthermore, the aforementioned apparatus/systems in Figure 2 can be implemented as program instructions for execution by a processor, as logic circuits, as ASIC, as firmware, etc., as is known to those skilled in the art. It is also appreciated that a signal for programming a computer having video processing means to perform the above-described method may be read from a data carrier or downloaded from a network.

**Claims**

1. A method of colour edge enhancement of a video signal, **characterised by** modifying a chrominance value of a pixel in dependence on the rates of change of luminance on opposite sides of said pixel.

**2.** A method according to claim 1, wherein said opposite sides are left and right.

**3.** A method according to claim 1, wherein said opposite sides are above and below.

**4.** A method according to any preceding claim, wherein said rates of change of luminance are the rates of change of luminance across one inter-pixel space.

**5.** A computer programmed to perform a method according to any preceding claim.

**6.** A signal representing a computer program for programming a computer to provide a computer according to claim 5.

**7.** A data carrier having a signal according to claim 6 recorded therein or thereon.

**8.** A video processing apparatus for performing colour edge enhancement on a video signal, **characterised by** means (30) for modifying a chrominance value of a pixel in dependence on the rates of change of luminance on opposite sides of said pixel.

**9.** An apparatus according to claim 8, wherein said opposite sides are left and right.

**10.** An apparatus according to claim 8, wherein said opposite sides are above and below.

**11.** An apparatus according to any one of claim 8, 9 or 10, wherein said rates of change of luminance are the rates of change of luminance across one inter-pixel space.

**12.** An apparatus according to any one of claim 8, 9, 10 or 11, wherein said means (30) comprises:

> means (36) configured to generate chrominance correction signals based on said rates of change of luminance;
> selecting means (38) configured to select the chrominance correction signal corresponding to the smaller rate of change of luminance; and
> summing means (42) configured to add the selected chrominance correction signal to the chrominance value of said pixel.

**13.** A method of processing an input frame of pixels representing a video signal having a transient response, each pixel having a luminance value and a chrominance value, comprising the steps of:

> enhancing color transition of each pixel by adjusting its color edge center based on the luminance values of neighboring pixels to provide enhanced pixels.

**14.** The method of claim 13, wherein enhancing said color transition for each pixel further includes the steps of enhancing the chrominance value of that pixel by adjusting its color edge center based on the luminance values of neighboring pixels.

**15.** The method of claim 14, wherein adjusting the chrominance value of a selected pixel further includes the steps of:

> comparing the luminance value of the selected pixel with luminance values of the neighboring pixels, to identify a pixel among the neighboring pixels with a luminance value closest to the luminance value of the selected pixel; and
> modifying the chrominance value of the selected pixel to bring it closer the chrominance value of the identified neighboring pixel.

**16.** The method of claim 15, wherein modifying the chrominance value of the selected pixel to bring it closer the chrominance value of the identified neighboring pixel, further includes the steps of:

> determining a correction value based on the chrominance value of the identified pixel,
> adding the correction value to the chrominance value of the selected pixel, to generate a corrected chrominance value for the selected pixel.

**17.** The method of claim 16, wherein:

each chrominance value has a *U* component and a *V* component;

each correction value has a *U* component and a *V* component;

adding the correction value to the chrominance value of the selected pixel, further includes the steps of adding the correction value components to the respective chrominance value components of the selected pixel.

**18.** The method of claim 17, wherein:

the *U* component of the correction value is $g_i(x)*dU_i(x)$, and

the *V* component of the correction value is $g_i(x)*dV_i(x)$, wherein:

*i* denotes the identified neighboring pixel in the frame,

$g_i(x)$ is a gain control function based on the difference in the luminance value of the selected pixel x and that of the identified pixel,

$dU_i(x)$ represents the difference in the *U* component of the chrominance value of the selected pixel *x* and that of the identified pixel, and

$dV_i(x)$ represents the difference in the *V* components of the chrominance value of the selected pixel *x* and that of the identified pixel.

**19.** The method of claim 15, wherein:

the frame comprises an array of pixels arranged as rows and columns;

the steps of adjusting the chrominance value of selected a pixel further includes the steps of:

comparing the luminance value of the selected pixel with luminance values of the neighboring pixels in columns to the right and left and the selected pixel, to identify a pixel among those neighboring pixels with a luminance value closest to the luminance value of the selected pixel; and

modifying the chrominance value of the selected pixel to bring it closer the chrominance value of the identified neighboring pixel.

**20.** The method of claim 15, wherein:

the frame comprises an array of pixels arranged as rows and columns;

the steps of adjusting the chrominance value of selected a pixel further includes the steps of:

comparing the luminance value of the selected pixel with luminance values of the neighboring pixels in rows above and below the selected pixel, to identify a pixel among those neighboring pixels with a luminance value closest to the luminance value of the selected pixel; and

modifying the chrominance value of the selected pixel to bring it closer the chrominance value of the identified neighboring pixel.

**21.** The method of claim 15, wherein modifying the chrominance value of the selected pixel further includes the steps of:

comparing the difference between the luminance value of the selected and that of the identified pixel, with a threshold value; and

if the difference exceeds the threshold value, then modifying the chrominance value of the selected pixel to bring it closer the chrominance value of the identified neighboring pixel.

**22.** The method of claim 15, wherein modifying the chrominance value of the selected pixel further includes the steps of:

comparing the difference between the chrominance value of the selected and that of the identified pixel, with a threshold value; and

if the difference exceeds the threshold value, then modifying the chrominance value of the selected pixel to bring it closer the chrominance value of the identified neighboring pixel.

**23.** The method of claim 15, wherein modifying the chrominance value of the selected pixel further includes the steps of:

comparing the difference between the luminance value of the selected and that of the identified pixel, with a threshold value; and

if the difference exceeds the threshold value, then modifying the chrominance value of the selected pixel to bring it closer the chrominance value of the identified neighboring pixel.

**24.** The method of claim 15, wherein modifying the chrominance value of the selected pixel further includes the steps of:

comparing a first difference between the chrominance value of the selected and that of the identified pixel, with a first threshold value;

comparing a second difference between the luminance value of the selected and that of the identified pixel, with a second threshold value; and

if the first difference exceeds the first threshold value, and if the first difference exceeds the first threshold value, then modifying the chrominance value of the selected pixel to bring it closer the chrominance value of the identified neighboring pixel.

**25.** The method of claim 13, further comprising the steps of:

performing color transition improvement (CTI) on the input pixels to provide pixels with improved color transitions; and

combining the values of the said enhanced pixels and the pixels with improved color transitions, to generate an improved and enhanced frame of pixels.

**26.** The method of claim 25, wherein combining the values further includes the steps of:

determining if the color transition near the center of the color edge is below a certain value, and if so, then providing the CTI results as the enhanced output, otherwise providing the enhanced pixels as the enhanced output.

**27.** The method of claim 25, wherein combining the values further includes the steps of:

determining the second derivative of the color edge transition; and

if the second derivative is essentially non-zero, then providing the CTI results as the enhanced output, otherwise providing the enhanced pixels as the enhanced output.

**28.** A apparatus for processing an input frame of pixels representing a video signal having a transient response, each pixel having a luminance value and a chrominance value, comprising:

a correction value generator for generating a correction value for adjusting a pixel's color edge center based on the luminance values of neighboring pixels; and

a combiner for adding the correction value to the chrominance value of the selected pixel to provide enhanced pixels.

**29.** The apparatus of claim 28, wherein:

the correction value generator further comprises a control unit that compares the luminance value of the selected pixel with luminance values of the neighboring pixels, to identify a pixel among the neighboring pixels with a luminance value closest to the luminance value of the selected pixel, and determines the correction value based on the chrominance value of the identified pixel, and

the combined modifies the chrominance value of the selected pixel by adding the correction value to the chrominance value of the selected pixel to bring it closer the chrominance value of the identified neighboring pixel.

**30.** The apparatus of claim 29, wherein:

each chrominance value has a $U$ component and a $V$ component;

each correction value has a $U$ component and a $V$ component;

the combiner adds the correction value components to the respective chrominance value components of the selected pixel.

**31.** The apparatus of claim 30, wherein the control unit generates the $U$ component of the correction value as $g_i(x)$

*dU$_i$(x)*, and generates the *V* component of the correction value as $g_i(x)*dV_i(x)$, wherein

> *i* denotes the identified neighboring pixel in the frame,
> $g_i(x)$ is a gain control function based on the difference in the luminance value of the selected pixel *x* and that of the identified pixel,
> *dU$_i$(x)* represents the difference in the *U* component of the chrominance value of the selected pixel *x* and that of the identified pixel, and
> *dV$_i$(x)* represents the difference in the *V* components of the chrominance value of the selected pixel *x* and that of the identified pixel.

32. The apparatus of claim 29, wherein the control unit is further configured to compare the difference between the luminance value of the selected and that of the identified pixel, with a threshold value, and if the difference exceeds the threshold value, then generates said correction value.

33. The apparatus of claim 29, wherein the control unit is further configured to compare the difference between the chrominance value of the selected pixel and that of the identified pixel, with a threshold value, and if the difference exceeds the threshold value, then generate the correction value.

34. The apparatus of claim 29, wherein the control unit is further configured to compare the difference between the luminance value of the selected and that of the identified pixel, with a threshold value, and if the difference exceeds the threshold value, then generate the correction value.

35. The apparatus of claim 29, wherein the control unit is further configured to (i) compare a first difference between the chrominance value of the selected and that of the identified pixel, with a first threshold value, (ii) compare a second difference between the luminance value of the selected and that of the identified pixel, with a second threshold value, and (iii) if the first difference exceeds the first threshold value, and if the first difference exceeds the first threshold value, then generate the correction value.

36. The apparatus of claim 28, further comprising:

> a color transition improvement (CTI) unit that processes the input pixels to provide pixels with improved color transitions; and
> a switch that combines the values of the said enhanced pixels and the pixels with improved color transitions, to generate an improved and enhanced frame of pixels.

37. The apparatus of claim 36, wherein:

> the switch is further configured to determine if the color transition near the center of the color edge is below a certain value, and if so, then provides the CTI results as the enhanced output, otherwise provides the enhanced pixels as the enhanced output.

38. The apparatus of claim 36, further comprising a differentiator that determine the second derivative of the color edge transition, and the switch is further configured to determine if the second derivative is essentially non-zero, and if so provides the CTI results as the enhanced output, otherwise provides the enhanced pixels as the enhanced output.

FIG. 1

CENTER OF COLOR EDGE

CENTER OF COLOR EDGE

FLAT REGION

FLAT REGION

# FIG. 2A

```
┌─────────────────────────┐
│ OBTAIN LUMINANCE VALUE OF│
│      CURRENT PIXEL AND    │── 10
│    NEIGHBORING PIXELS     │
└─────────────────────────┘
             │
             ▼
┌─────────────────────────┐
│  COMPARE LUMINANCE VALUE OF│
│  CURRENT PIXEL WITH LUMINANCE│── 12
│ VALUE OF THE NEIGHBORING PIXELS│
└─────────────────────────┘
             │
             ▼
┌─────────────────────────┐
│ DETERMINE A CORRECTION VALUE │── 14
└─────────────────────────┘
             │
             ▼
┌─────────────────────────┐
│    ADD THE CORRECTION VALUE │
│       TO THE CHROMINANCE   │
│       OF THE CURRENT PIXEL,│
│  TO "PUSH" THE CURRENT PIXEL│── 16
│  TOWARDS A NEIGHBORING PIXEL│
│  WITH CLOSEST LUMINANCE VALUE│
│  TO THAT OF THE CURRENT PIXEL│
└─────────────────────────┘
             │
             ▼
┌─────────────────────────┐
│      PERFORM CTI ON THE    │── 18
│  ORIGINAL VIDEO SIGNAL PIXELS│
└─────────────────────────┘
             │
             ▼
┌─────────────────────────┐
│    COMBINE THE CORRECTED   │
│     CHROMINANCE VALUE OF    │
│    THE PIXEL WITH THAT OF   │── 20
│  CORRESPONDING PIXEL IN THE │
│   CTI PROCESSED VIDEO PIXELS│
└─────────────────────────┘
```

# FIG. 2B

FIG. 3

# FIG. 4

# FIG. 5

# FIG. 6